Europäisches Patentamt

European Patent Office

Office européen des brevets

(11) Publication number: **0 260 699**
**A2**

# EUROPEAN PATENT APPLICATION

(21) Application number: **87113642.0**

(22) Date of filing: **17.09.87**

(51) Int. Cl.4: **F16L 59/04** , F16L 59/06 ,
F25D 23/00

(30) Priority: **18.09.86 IT 4574586**

(43) Date of publication of application:
**23.03.88 Bulletin 88/12**

(84) Designated Contracting States:
**CH DE ES FR GB IT LI SE**

(71) Applicant: **ZELTRON - Instituto Zanussi per la
Ricerca S.p.A.
Via Principe di Udine n. 66
Campoformido Udine(IT)**

(72) Inventor: **Bacci, Dino
Via Montreale 10
I-33170 Pordenone(IT)**

(74) Representative: **Patentanwälte Grünecker,
Kinkeldey, Stockmair & Partner
Maximilianstrasse 58
D-8000 München 22(DE)**

(54) **Method for manufacturing refrigerating apparatus.**

(57) A method for the manufacture of refrigerating
apparatus in which the insulating structure of the
housing and the door involves the use of evacuated
anorganic powders.

The method permits a refrigerating apparatus to
be manufactured by an automatized process, includ-
ing the assembly of all functional components.

FIG. 1

EP 0 260 699 A2

## Method for Manufacturing Refrigerating Apparatus

The present invention relates to a method for manufacturing refrigerating apparatus such as refrigerators or freezers of the domestic type, having a housing formed of respective waals and at least one door having suitable thermal insulation. Known refrigerating apparatus are usually provided with a thermal insulation made of expanded polyurethane or glass fibres.

These insulation sytems require walls of cosiderable thickness, because the thermal conductitivy cannot be reduced beyond determine limits. In the case of polyurethane forms, specifically, the thermal conductivity cannot be reduced to below about 0.015 Kcal/mh°C.

In addition, the method of making expanded polyurethane usually involves the employ of Freon gas as a foamign agent, i.e. a chemical substance which is dangerous for man and an environment pollutant.

There has recently been proposed (US-PS 4,529,638) a novel type of insulation composed of a panel of expanded resin enclosing an evacuated container filled with a material of low thermal conductivity and low specific weight. The employed material is preferably a perlite powder, and the container is made of a flexible plastic sheet or a like-wide flexible composite plastic and metal sheet material.

The vacuum created in the container is about $10^{-2}$ to $10^{-1}$ Torr. An insulating wall of this type havign a thickness of 3 cm, with the internal container having a thickness of 1 cm, has a thermal conductivity of 0.008 Kcal/mh°C.

It is to be noted, however, that the thermal conductivity of the perlite-filled internal container alone is only 0.004 Kcal/mh°C, that is, just half that of the complete insulating wall.

In addition, the thus obtained insulating wall still requires the use of a certain amount of expanded polyurethane with the employ of Frean gas a a foaming agent, so that the above noted dangers for man and environment still exist.

The solution proposed by US-PS 4,529,638 is finally of a composite type complicating the manufacturing process by requiring an additional step for making the powder-filled and evacuated containers.

This method also requires the use of special materials and manufacturing procedures for reducign the gas-permeability of the containers and for avoiding the formation of thermally conductive bridges at the connections between panels used to form the housing of the refrigerating apparatus.

A substantially similar technology had already been known from US-PS 2,164,143, which describes an insulating structure, particular for a cold storage device, obtained by filling the empty space between two hermetically welded flexible metal sheets with a fine powder, such a metal oxides and/or diatomite (Kieselguhr), and subsequently evacuating said space. The thus obtained thermal insulation structure has then to be enclosed in an air-tight envelope formed by an outer lining and an inner lining joined to one another by the interposition of a wooden frame and rubber gaskets.

This solution is necessary for protectiong the insulating panel, and particularly the respective weld seams, during the manufacturing process and later use.

In addition, the housing made by the method of US-PS 2,164,143 does not permit the integration of the components of a refrigerant circuit (e.g. evaporator, condenser etc.) as required in modern refrigerating apparatus. The finished structure is thus merely a simple enclosure with insulating walls for the cooled storage of foods or the like with the aid of voluminous ice blocks as was customary at the time this patent was applied for.

A main object of the present invention is the provision of a highly automatized method for the manufacture of refrigerating apparatus with an insulating structure on the base of evacuated anorganic powders.

The method according to the invention is applicable to the manufacture of refrigerating apparatus, particularly of the domestic type, comprising a housing closed by at least one door, the walls of said housing being formed of a sheet material an containing a thermal insulation formed of an evacuated anorganic powder material, further comprising a refrigerant circuit at least including a compressor, a condenser, an evaporator, and associated connection and control elements, said method being characterized by including a first step of cutting and perforating two planar sheet blank havign the developed shape respectively of the complete interior and exterior walls of the apparatus, and of mounting on said sheet blanks respective components of said refrigerant circuit, a second step of folding and welding said sheet blanks to form two fully equipped box-shaped elements each having one open side, a third step of inserting one of said box-shaped elements into the other and welding them along their edges so as to enclose an empty space therebetween, and a fourth step of completely filling said empty space with an anorganic powder, evacuating sadi empty space, and hermetically closing it.

The characteristics of the invention will become evident from the following description, given by way of example with reference to the accompanying drawings, wherein:

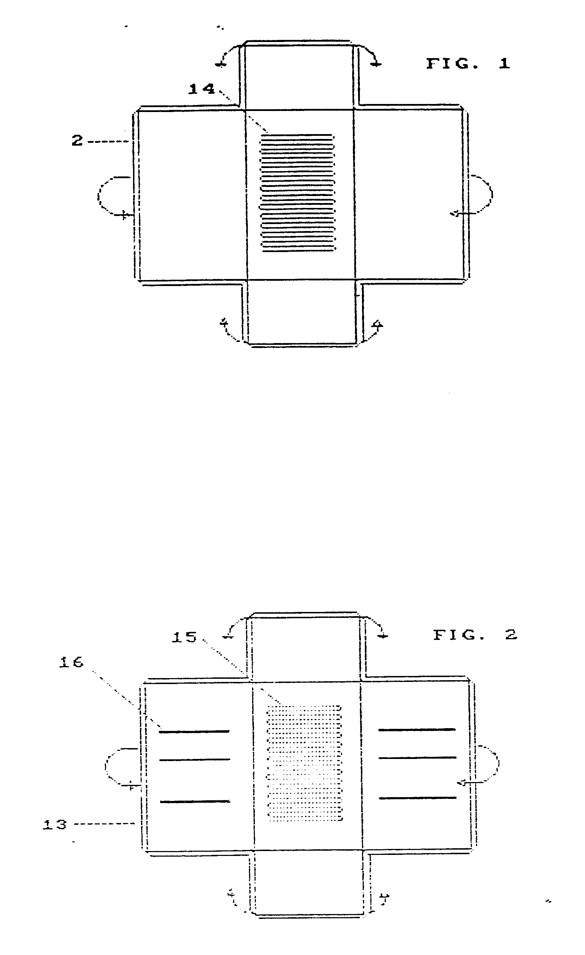

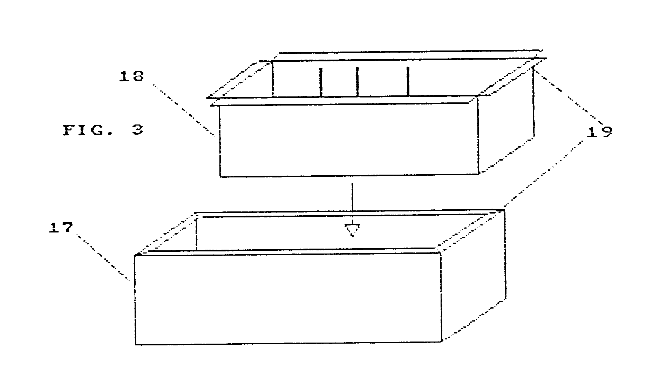

figs. 1 to 4 diagrammatically show successive steps in the manufacture of a housing of a refrigerating apparatus by the method according to the invention.

The conventional method for the manufacture of refrigerating apparatus usually provides for the construction of a housing having insulating walls of expanded polyurethane, and for the subsequent mounting therein of the functional and structural components of the apparatus.

In contrast thereto, the method according to the invention provides for a first step in which a planar one-piece sheet blank (12) is cut to the developed shape of the complete outer walls of the housing, anotehr one-piece sheet blank 13 being cut to have the developed shape of the complete interior walls of the housing (figs. 1 and 2, respectively).

The dimensions of sheet blank 12 have to be sufficiently greater than those of sheet blank 13, because the two box-shaped elements to be formed thereof have to be inserted one into the other with an empty space therebetween to be subsequently filled with an insulating powder, as will become evident as the description proceeds.

After having thus been cut, sheet blanks 12 and 13 are suitably perforated by s simple automatic operation on a planar surface, for providing respective passages for conduits connecting the functional components of the refrigerating apparatus to one another. These functional components, such as a condenser 14 and an evaporator 15, are then mounted, together with their respective connecting conduits, on the rear wall portion of blank 12 and an inner wall portion of blank 13, respectively, by a likewise automatized operation.

At the same time suitable guide rails 16 for the grid shelves to be inserted into the finished refrigerating apparatus are mounted on the lateral wall portions of sheet blank 13.

The above named components, i.e. vondenser 14, evaporator 15, guide rails 16 are of course only representative of the components required for completing the apparatus, it being understood that all of the other components such as conduits, a thermostat, a lighting fixture and the like are mounted in the same manner, although not specifically illustrated with a view to simplicity of the description and drawings.

The second step of the method consists in folding the previously completed equipped sheet blanks 12 and 13 as indicated by arrows in figs. 1 and 2, and by welding them along their contiguous edges to thereby form two box-shaped elements 17 and 18 each having one open side (fig. 3).

As already indicated above, the dimensions of box-shaped element 18 are smaller than those of box-shaped element 17, so that in a third step of the method element 18 may be inserted into element 17 with an empty space formed therebetween.

In performing this step of the method, the two box-shaped elements 17 and 18 are welded along their free edges 19, preferably by a continuous laser welding operation. Edges 19 should be formed with portions of different mechanical strength for compensating the shrinkage of the insulating powders as the space between elements 17 and 18 is being evacuated in the succeedign step of the process.

In the course of this fourth step of the method according to the invention, the empty space between the two elements 17 and 18 is filled with evacuated anorganic powder materials and is then itself evacuated.

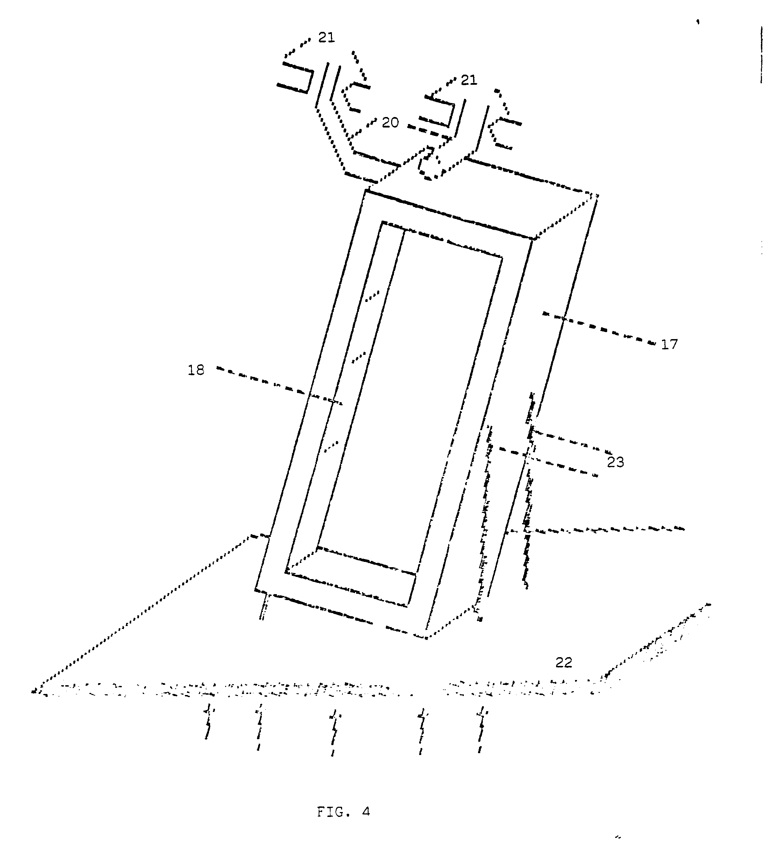

To this purpose, and as shown in fig. 4, outer element 17 is preferably provided with two conduit portions 20 extending at right angles to one another and adapted to be hermetically sealed by weldign by means of electrodes 21 after the empty space has been filled with the powders and evacuated.

To promote the compaction of the powders in the empty space, the housing is maintained at an inclined position and vibrated by means of a vibrating table 22 provided with suitable supports 23.

The described method for manufacturing the housing is likewise applied to the manufacture of the door, which is likewise made of an inner and an outer panel welded to one another, the space therebetween being likewise filled with an insulating powder and then evacuated.

The manufacture of the door by this method offers the same advantages as described with regard to the housing, in that the processing operations are carried out on planar sheet blanks, permitting the conventional supports or containers to be mounted on the sheet blank forming the interior door panel prior to the assembly of the door and the formation of its insulation.

The method according to the invention may of course be applied to the manufacture of refrigerating apparatus of any kind, thus also for refrigerator-freezer combinations having two or more doors, or freezers of the cupboard and chest types.

In summary, the method offers the following advantages:

-an increase by about 50% of the insulating capacity by comparison to polyurethane in a wall of the same thickness, or a corresponding reduction of the wall thickness for obtaining the same insulating capacity,

-complete impermeability of the wall panels to thereby eliminate the need of absorbent substances and ensure stable thermally insulating characteristics over extended periods of time,

-simplification of the construction and assembly of the refrigerating apparatus with the resultant superior reliability, and

-a less dangerous manufacturign process by the elimination of noxious substances (Freon).

## Claims

1. A method for manufacturing refrigerating apparatus, particularly of the domestic type, comprising a housing closed by at least one door, the walls of said housing beeing formed of a sheet material and containing a thermal insulation formed of an evacuated anorganic powder material, further comprising a refrigerant circuit at least including a compressor, a condenser, an evaporator, and associated connection and control elements, said method being characterized in that it includes a first step of cutting and perforating two planar sheet blanks (12, 13) having the developed shapes respectively of the complete interior and exterior walls of the apparatus, and of mounting on said sheet blanks respective components (14-16) of said refrigerant circuit, a second step of folding and welding said sheet blanks (12, 13) to form two fully equipped box-shaped elements (17, 18) having one open side, a third step of inserting one of said box-shaped elements into the other and welding them along their edges (19) so as to enclose an empty space therebetween, and a fourth step of completely filling said empty space with an anorganic powder, evacuating said empty space, and hermetically closing it.

2. A method according to claim 1, characterized in that said edges of said sheet blanks to be welded are formed with portions of different mechanical strength for compensating the shrinkage of the thermally insulating powder when said empty space between said box-shaped elements is evacuated.

3. A method according to claim 1, characterized in that said edges of said sheet blanks are welded by a continuous laser welding operation for joining said boxshaped elements.

4. A method according to claim 1, characterized in that as said empty space is filled with said insulating powder said housing structure is subjected to vibrations.

5. A method according to claim 1, characterized in that said manufacturing steps are likewise carried out for separately manufacturing the door of the apparatus, the traditional container and support elements being mounted on the inner door panel during said first manufacturing step.

FIG. 1

14

2

FIG. 2

15

16

13

FIG. 3

21

21

20

17

18

23

22

FIG. 4